(19) **Europäisches Patentamt**
**European Patent Office**
**Office européen des brevets**

(11) **EP 4 350 608 A1**

(12) **EUROPEAN PATENT APPLICATION**

(43) Date of publication:
**10.04.2024 Bulletin 2024/15**

(21) Application number: **22199826.3**

(22) Date of filing: **05.10.2022**

(51) International Patent Classification (IPC):
**G06T 7/00** $^{(2017.01)}$  **G06T 7/215** $^{(2017.01)}$
**G06V 10/46** $^{(2022.01)}$  **G06T 3/00** $^{(2024.01)}$

(52) Cooperative Patent Classification (CPC):
**G06T 7/0016; G06T 7/215; G06V 10/469;**
**G06V 10/473;** G06T 2207/10072;
G06T 2207/10116; G06T 2207/30008; G06V 10/24;
G06V 10/44

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **KABUS, Sven**
**Eindhoven (NL)**

(74) Representative: **Philips Intellectual Property &**
**Standards**
**High Tech Campus 52**
**5656 AG Eindhoven (NL)**

(54) **AUTOMATIC AND PRECISE LOCALIZATION OF SLIDING TISSUE IN MEDICAL IMAGES**

(57)     Image processing system (SYS) and related method for image-based sliding interface detection. The system comprises an input port (IN) for receiving two medical input images (I1, I2), previously acquired at different times of a patient (PAT) during sliding motion of one anatomical features (AF1, AF2) of the patient against one other of the two anatomical features (AF1, AF2). The sliding motion defines a sliding interface (SI). A sliding motion evaluator (SME) applies a registration algorithm to compute, a series of metric maps that are capable responding to sliding motion by varying a parameter of the algorithm. A sensitivity analyzer (SA) computes a sensitivity map that represents how the series of metric maps vary with the said parameter. A sliding interface detector (SD) detects, based on the sensitivity map, an image-based location of a representation of the sliding interface.

**FIG. 1**

**Description**

FIELD OF THE INVENTION

The invention relates to an image processing system for image-based sliding interface detection, to an arrangement including such as a system, to a related method, to a computer program element and to a computer readable medium.

BACKGROUND OF THE INVENTION

Certain anatomical configuration in human body may give rise to one or more sliding interfaces, along which anatomical features of interest are passing each other in a sliding motion. Examples may include the motion of lung lobes along fissure surfaces, or along the pleura, or motion in joints, etc.

Precise localization of such sliding interfaces (which may form a surface or sliding layer) may be beneficial for certain image processing task in support of diagnosis or therapy. Examples may include measurement of cartilage thickness in joints, analysis of pulmonary function, alignment of respiratory phase gated images, planning for radiation therapy treatment, etc.

One way for localizing such a sliding interface may rely on segmentation applied to a single image volume for example. The segmentation may use image intensities or structures contained in the image. Although demonstrating good results at times, imaging or reconstruction artifacts or anatomical modifications caused by a disease or even by poor image contrast, can result in segmentation failures or inaccuracies.

An alternative approach may use two or more images recorded whilst such sliding motion took place, such as image acquisition of a knee joint during flexion/extension, or lung image acquisition during a breathing cycle. Another example is a 4D-CT acquisition where each scan is acquired at a different respiratory phase. A related approach is described by R Amelon et al in "A measure for characterizing sliding on lung boundaries ", published Ann. Biomed. Eng., vol 42(3), pp 642-50, (2014), where image registration techniques is used. However, the method described requires a priori knowledge of certain image registration parameters which are generally unknown.

SUMMARY OF THE INVENTION

There may therefore be a need for improved image processing.

An object of the present invention is achieved by the subject matter of the independent claims where further embodiments are incorporated in the dependent claims. It should be noted that the following described aspect of the invention equally applies to the related method, the medical imaging arrangement, to the computer program element and to the computer readable medium.

According to a first aspect of the invention there is provided an image processing system for image-based sliding interface detection, comprising:

an input port for receiving at least two medical input images, previously acquired at different times of a patient during sliding motion of at least one of at least two anatomical features of the patient against at least one other of the at least two anatomical features, the said sliding motion defining a sliding interface in respect of the at least two anatomical features;

a sliding motion evaluator configured to apply a registration algorithm to compute, based on the at least two images and by varying a parameter of the said registration algorithm, a series of metric maps that are capable responding to sliding motion as recorded in the at least two input images;

a sensitivity analyzer configured to compute a sensitivity map that represents how the series of metric maps vary with the said parameter; and

a sliding interface detector configured to detect, based on the sensitivity map,) a location of a representation of the sliding interface in at least one of the at least two input images.

System of claim 1, wherein the sliding motion evaluator is to apply the registration algorithm to the at least two input images at different instances of the parameter, in order to obtain the series of metric values based on a sequence of registration results per the said parameter.

According to one embodiment, the parameter is a regularization parameter that is configured to influence a smoothness term based on which the algorithm is operable.

According to one embodiment, wherein the registration algorithm is based on establishing vector fields per parameter for at least one of the at least two images.

According to one embodiment the metric is a function of the said vector fields.

According to one embodiment System the vector field is a deformation vector field.

According to one embodiment the metric is based on any one of: i) a difference between vector fields, ii) a Jacobian of the vector fields, iii) eigenvalues of the vector fields, (iv) an operator acting on a vector field.

According to one embodiment the system comprises a visualizer configured to generate a graphics display for display on a display device, the graphics display including an indication of the location of the representation of the sliding interface in at least one of the at least two images.

According to one embodiment, the at least two images are acquired by any one of: i) imaging apparatus configured for transmission imaging, ii) an imaging apparatus configured for emission imaging, iii) a magnetic resonance imaging apparatus, iv) an ultrasound imaging apparatus.

According to one embodiment, the detection operation by sliding interface detector is based on thresholding.

In another aspect there is provided arrangement comprising a system of any one of the previous claims, and an imaging apparatus.

In another aspect there is provided a computer-implemented method for image-based sliding interface detection, comprising:

receiving at least two medical input images, previously acquired at different times of a patient during sliding motion of at least one of at least two anatomical features of the patient against at least one other of the at least two anatomical features, the said sliding motion defining a sliding interface in respect of the at least two anatomical features;

applying a registration algorithm to compute, based on the at least two images and by varying a parameter of the said registration algorithm, a series of metric maps that are capable responding to sliding motion as recorded in the at least two input images;

computing a sensitivity map that represents how the series of metric maps vary with the said parameter; and

detecting, based on the sensitivity map,) a location of a representation of the sliding interface in at least one of the at least two input images.

In yet another aspect there is provided a computer program element, which, when being executed by at least one computing unit is adapted to perform the method.

In a further aspect there is provide a computer readable medium having stored thereon the program element.

The proposed system and method allow fully automatic sliding interface detection. No user input is required. Further, no segmentation is needed thus overcoming the above-mentioned limitations of segmentation-based approaches. Unlike many, if not all, segmentation approaches, the system and method is not anatomy specific and can be used for detection of any such "anatomy-versus-anatomy" sliding interface. Thus, the proposed setup is invariant to anatomy types. With the proposed system and method, no prior segmentation of the input imagery is required. The system and method may thus be used without any segmentation.

The proposed system and method rely on motion changes/position changes rather than on anatomical structures per se. Because the processing uses multiple input images (as opposed to segmentation using a single image), the proposed system and method is more robust.

In one embodiment, the system is configured to apply a registration algorithm in a repeated manner as a tool to investigate the sensitivity of a certain metric to variations in the input parameter space. The derivative/gradient of a metric with respect to the varied input parameter may be used for sliding interface/sliding motion detection.

Using the determined amount of shear for a local sliding indicator as proposed in *Amelon et al* cited above requires the weight of the regularization term inside a registration algorithm to be chosen from an optimal range which may not be straightforward: choosing a relatively low weight will over-estimate sliding, resulting in a large number of false positive findings which is undesirable. But choosing a relatively high weight results in a rather stiff deformation with few or zero sliding findings. Optimality in terms of finding an optimal range for the regularization weight depends on the dataset - both regarding the amplitude of motion but also regarding the affected region inside the image. For example, sliding along the pleura can be better identified than sliding along the lung fissures or along the abdominal cavity in abdominal scans. The proposed system and method avoid making such choices and is configured to strike the right balance by monitoring changes of the metric over with varying parameter dM/dP. Thus, what is proposed herein is to monitor changes over a range of amounts of deformability. By construction then, there exists a value inside this range, for which the response is optimal.

In general, a regularization weight cannot be chosen independently from the image alignment, as an appropriate weighting of the regularizer is preferable to ensure accurate alignment.

The proposed system and method avoid the need to choose an optimal range for the regularizer weight. Instead, the proposed provides a general and robust way to fully-automatically detect sliding motion or sliding interface.

Use of (non-rigid) image registration algorithm is merely a tool herein. The aim of such algorithms is usually to provide a transformation to align source image with target image in a common coordinate system. However, the transformation computed by such image registration algorithms is of lesser or no interest herein. What is of interest herein are the (deformation) vector fields that are computed in the context of such image registration algorithms. It is behaviors of such (deformation) vector fields that are harnessed herein for the purpose of, preferably fully automatic, sliding interface detection.

More than two input images can be used, for example in connection with group-wise registration algorithms. As an alternative, concatenation and inversion may be used when three or more images are used. For example, given input images A, B, and C, one may register A onto B and A onto C. Vector fields for other combinations (e.g., C onto B) can then be derived via concatenation and/or inverting vector fields.

Control point-based registration may be used where it is not required to compute the vector field for each and every image location ab initio and de novo. A sparse set of control points can be used instead, and the local vector fields for any desired voxel or pixel can be intra/-extra-polated as desired.

"user" relates to a person, such as medical personnel or other, operating the imaging apparatus or overseeing the imaging procedure. In other words, the user is in general not the patient.

BRIEF DESCRIPTION OF THE DRAWINGS

Exemplary embodiments of the invention will now be described with reference to the following drawings, which, unless stated otherwise, are not to scale, wherein:

Fig. 1 shows a schematic block diagram of a medical imaging arrangement;
Fig. 2 shows a block diagram according to one embodiment of a system that may be used in Fig. 1 for image-based detection of a siding interface between anatomical features;
Figs 3A-C show embodiments of the system in Fig. 2; and
Fig. 4 shows a flow chart of a computer-implemented method for image-based detection of a sliding interface between anatomical features.

DETAILED DESCRIPTION OF EMBODIMENTS

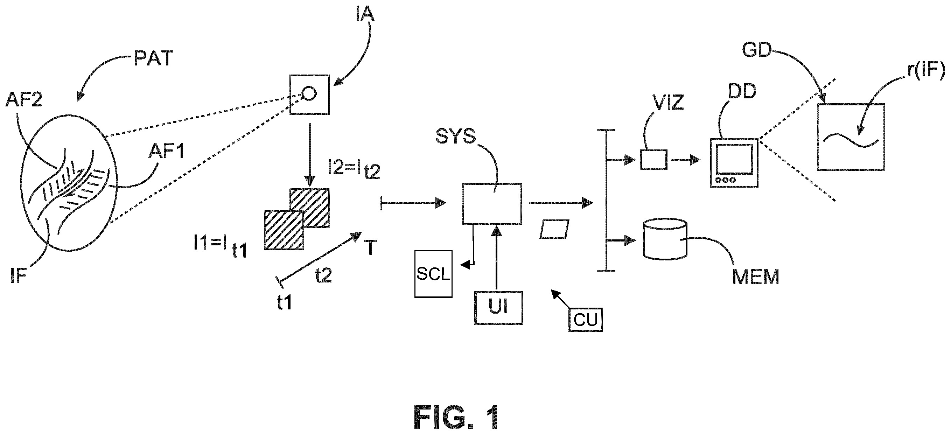

With reference to Fig. 1, there is shown a schematic block diagram of a medical imaging arrangement. The arrangement may include a medical imaging apparatus IA providing input imagery to an image-based detection system SYS. The system is configured to detect, based on the input imagery, certain one or more sliding interfaces IF in relation to two or more anatomical features AF1, AF2 of a patient PAT as captured in the imagery. Such an online, real-time configuration of system SYS is preferred where imagery is streamed to the system on acquisition. However, this is not at the exclusion of other, off-line type embodiments, where acquired imagery is first stored in a non-volatile memory and may then be retrieved therefrom (eg, upon user request) by system SYS for processing. The system may be implemented by one or more data processing units CU.

In more detail, the system SYS is computer implemented to process the input imagery 11, 12, comprising images (frames) acquired at different times of patient PAT whilst there is sliding motion relative of at least two of such anatomical features AF1, AF2. The said features 11, 12 may relate to internal anatomical configuration within patient PAT. The input imagery comprises at least one earlier image, and at least one later image, designated herein as image/frame 11 and image/frame 12, respectively. There may be more than two such input images Ij, forming an image sequence of a region of interest of the patient, but in the following we will refer to two such input images 11, 12, without limiting the present disclosure.

The imagery is acquired by the medical imaging apparatus IA, which may be of any suitable modality for the imaging task at hand, such as radiographic X-ray, tomographic X-ray, MRI, PET, SPECT or any other. The input images 11, 12 have a certain size in terms of pixels arranged in a matrix structure such as in columns and rows, The size of the two images may be the same and if not can be made so by sampling However, it is not a necessity herein for the two input images to 11, 12 to have the same size. The imagery is preferably 3D, such as reconstructed 3D volumes, but 2D projection imagery as input images are not excluded herein in some alternative embodiments.

The detection system SYS is computer implemented to process the input imagery 11, 12 to produce as output an indication in relation to the interface IF along which there is relative motion between the two (or more) anatomical features F1, F2. The output provided by system may allow a user establishing whether there is such an interface represented by the imagery, and, preferably, where the interface runs. Thus, the output may merely provide a binary indication such as a sound signal, or visual signal or any other sensory output that merely informs the user on the presence of such a sliding interface. Preferably, the output does more than this and provides an in-image indication of wherein in the input imagery the interface is presented.

For example, in one embodiment, the in-image indication may be used by a visualizer VIZ to produce a graphics display GD that includes a graphical representation r(IF) of the sliding interface along which motion of one or both of the anatomical features AF1, AF2 took place. Depending on the dimensionality of the input imagery, two (2D) or three (3D) dimensional imagery is envisaged herein, the representation r(IF) may be a lineal structure, or may be a 2D surface in 3D space, respectively. The indication r(IF) of the sliding interface IF may be displayed in a different color or grey value, shading, hue, or other visual modulation, relative to the rendering of surrounding image elements (voxels or pixels). In the following, the term "image element" may be used herein at times to refer generally to a pixel or voxel, depending on the dimensionality of the input imagery. In addition to providing such an indication of the interface IF's in-image location by graphical means in the graphics display GD, the mentioned sensory signal (sound, visual, haptic, etc) may still be provided as an auxiliary alert signal. The output graphical representation r(IF) may be included as an overlay structure on one, or both, of the input images 11, 12 to indicate the interface IF's location. The graphical representation r(IF) may outline the location and course of the interface. The graphical indication may be displayed without the input image if desired, but this is less preferred. Alternative to graphical representations, the location of the interface IF may be provide purely numerically as a set of coordinates.

In-image indication of the interface location based on at least one of the input imagery 11, 12 is preferred as this allows a user, such as medical personnel, to quickly ascertain the location of the interface IF. This knowledge may inform further diagnostic or therapeutic steps. The location of the interface IF provided by system SYS may be used to control other medical equipment, such as a surgical robot or any other therapy apparatus such as radiation therapy apparatus (LINAC) or any other. In some embodiments, the indication may be provided as a control signal to control operation of such or other medical equipment, such as contrast pump, other or the same imaging apparatus, etc.

The system SYS's output data encoding such an indication on interface IF's location may be stored in a memory MEM alongside, or in association with, one, some, or all of the input imagery 11, 12.

Such sliding interface(s) IF between anatomical features AF1 and AF2 may arise in various scenarios, such as in lung imaging or imaging of joints such as the human knee or elbow etc. In the earlier case of lung imaging, such interface IF may arise in the context of interlobal motion between lung lobes AF1, AF2, or the motion of the lobe relative to the pleura relative to the ribcage, or other. In joint imaging, such an interface may be defined by the motion of the two bone parts that meet at the joint, such as ball versus socket in spheroidal type of joints or in hinge joints for example. The sliding motion in the two cases may be caused by breathing or by joint actuation, such as knee stretching etc. There is no need for the two features AF1, AF2 to be in direct contact during the sliding motion. The features may be coupled by an interstitial substance, such as fat, a fluid or cartilage. Alternatively, one of the features AF1, AF2 may relate to such an interstitial substance, with the other referring to a bone portion or other tissue type that couples against the said substance. It is not a necessity herein that both features are in motion to define the sliding interface, in the same or in opposed direction (exemplary shown as to opposed arrows in Fig. 1), as it is sufficient for merely one of the features AF1 to slide past the other AF2. The sliding interface IF is the locus (in general a 2D surface) along which the sliding motion occurs. A certain amount of shearing may be induced, depending on adhesion or other coupling or friction between the two features AF1, AF2. The interface may run in a bulk of tissue of the same type. Thus, the two anatomical features may be sub-features of the same anatomical feature, so may not necessarily refer to different material or tissue types. For example, the interface may define a cleft or fracture in a bone, or may be defined as interlobar fissures. However, in other cases the two features may refer to different entities, comprising, or made of, different materials. Thus, the sliding interface IF may or may not define a material interface. Clinical examples where knowledge of the location of the sliding interface is helpful may include image-based measurement of cartilage thickness in joints, image-based analysis of pulmonary function, image-based alignment of respiratory phase gated images, or, to a lesser extent, but not excluded herein, in planning for radiation therapy treatment.

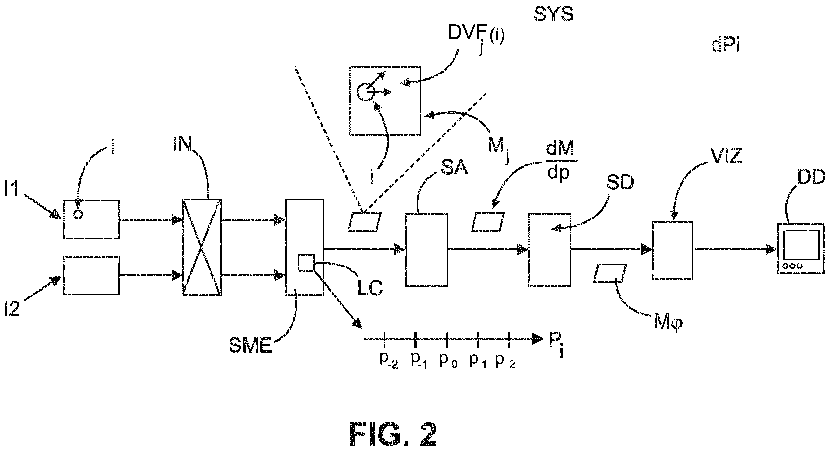

Referring now to the block diagram of Fig. 2, the system SYS may include as functional components a sliding motion evaluator SME, a sensitivity analyzer SA, and a sliding interface detector SD. In operation, an input port IN of system SYS receives the two (or more) input images 11, 12, for example in an on- or offline setting as mentioned earlier. The sliding motion evaluator SME analyzes the input imagery and produces spatial maps M for the input imagery 11, 12. In particular, a series of such maps $M=M_j$ is produced for the input imagery I1, I2. Preferably, the maps M correspond in size to the size of the input imagery. Some or each of the maps have thus the same spatial structure in terms of image elements as any one, or both, or indeed all, of the input images 11, 12. Each map $M_j$ corresponds to a vector field $DVF_j$ and each spatial entry of $M_j$ represents a quantity that responds to motion at some image location i that occurred during acquisition times of the input imagery I1, I2. For example, as shown in Fig. 2, each entry of $M_j$ may code for a respective vector field $DVF_j$ associated with the respective image location i, and this is done for plural, for example all, image locations of the input images 11, 12. Instead of each spatial entry of some or each such map $M_j$ representing such a vector field, each entry may be computed as function of a such a vector field. This function may be referred to herein as a metric $\mu$. The metric $\mu$ may be implemented by using a metric operator O that acts on a vector field. Thus, for a given map $M_j$ in the series, $M_j(i) = O(DVF_j)(i)$. The map M may thus also be referred to in embodiments as a motion metric map of the image processing algorithm used by sliding motion evaluator SME.

In the context of some such image processing algorithms envisaged herein, one of the at least two input images 11, 12 may be designated as the reference image against which the vector fields $DVF_j$ are measured. One may, purely on conventional grounds, refer to image I1 as the reference image, with the understanding that this is in no way limiting: any of the one or more other input images 12 may be just as well designated as the reference image.

The series $M_j$ can be obtained by the sliding motion evaluator SME varying a parameter of an algorithm that the sliding motion evaluator SME implements. Thus, the sliding motion evaluator SME may implement a parameterized image processing algorithm. The image processing is configured to respond to motion as said. The sliding motion evaluator SME may include an iterative loop component LC that reruns computing of the map $M_j$ for each new parameter $p_j$. The parameter p may be varied by loop component LC in a pre-defined interval. This interval may be set as a system variable, or the system includes a user interface UI for user to change the interval. A step width may be set or may also be changed by used through the user interface UI. The variation of the algorithm parameter p by loop component of sliding motion evaluator SME is illustrated by the scale of values $p_j$ in Fig. 2. Variation of parameter $p$ may be over multiple instances thereof. Two instances may be sufficient on some instances, but preferably variation is over more than two. Three or more instances of $p$ may be preferably. For example, three may be sufficient and may strike a useful balance between performance and responsiveness. Instances of $p$ of four or five may be used with similar effects. More than five instances are envisaged in a good number of implementations. For example, the number of instances may be in the 10s or 100s, or even more if required.

Sliding motion analyzer SA takes in as input the series of maps $M_j$. Based on the input map series, a sensitivity map $M^s$ is established using an Operator D, $D(M_{jj}) = Ms$. The sensitivity map has preferably the same size as the reference image 11. The sensitivity map $M^s$ is configured to measure how the motion maps $M_j$ vary locally through the series $M$ as a function of $p$.

In one embodiment, the operator D used by sliding motion analyzer SA is a difference operator $D$, such as a differentiation operator *over p*. The operator $D$ may be configured to approximate the differential or gradient of the map series $M$, thus $M^s = dM/dp$. For example, if a metric $\mu$ is used, the map $dM/dp$ may represent how the metric values responds to motion across the images and to variations over image processing algorithm parameter $p$.

The sensitivity map $M^s$ may be analyzed by sliding motion detector SD, for example using thresholding or other. The spatial mask for interface location IF may be constructed in this way. The thresholds may be found by experimentation or machine learning. If required, the thresholds may be adjusted through a suitable interface by the user. The sensitivity map may be redone for each threshold setting and is preferably dynamically displayed, with or without the input imagery I1 or 12. This dynamic threshold adjustment option with visual check, allows user to find best spatially resolved representation for the interface location.

The output of the detector SD may be represented again as a map such as a spatial mask $M^\varphi$ that indicates, for each element, whether or not the respective image element is indicative of a portion of the sliding interface SI. This interface map $M^\varphi$ may be stored for further processing. In embodiments interface map $M^\varphi$ may be passed on to visualizer VIZ. Visualizer VIZ maps the interface map $M^\varphi$ to a color or grey value palette for example. The visualizer may use the so mapped spatial information to drive video circuitry of the display device DD to effect displaying the graphics display GD on the display device DD. As mentioned, the graphics display may include producing an image overlay based on the interface map to indicate in at least one of the input images 11, 12 where the interface IF is located. The interface map $M^\varphi$ may be used to highlight a respective image portion in at least one of the input images I1 I2 that indicates location and, optionally, extent of the sliding interface IF. In other embodiments, discrete indicator symbology, such one or more hair-crosses or arrows, etc, are arranged to point out location of the sliding interface IF. Any other visualization scheme based on the interface map $M^\varphi$ is envisaged herein.

It has been found that one suitable type of image processing algorithms that can be used by the sliding motion evaluator SME is, surprisingly, an image registration algorithm of the non-rigid type. For example, some such algorithms are formulated in terms of optimizing an objective function F that uses a regularization or smoothing term.

More particularly, image registration may be formulated as iteratively minimizing a joint sum of so called "internal forces" and "external forces". Conceptually, the external forces result from a chosen similarity measure (e.g., sum of squared Differences, (local) cross-correlation, mutual information, normalized gradient fields) and are therefore based on image-based features (intensities, edges, etc.). On the other hand, the internal forces are linked to a regularization term (or "deformation model") which, in a simpler setting, penalizes the spatial gradient of the displacement or incorporates more complex terms, e.g. from a physically motivated elasticity model.

Starting with an initial deformation (e.g., zero displacement), in each iteration step the joint sum of internal and external forces is decreased. Convergence is reached if internal and external forces are in equilibrium state, that is, when an equilibrium point has been reached.

Because the cost function is made up from both components, external and internal, the optimization task is one of negotiating between the two (or more) criteria: i) the similarity (external forces) of the solution ($T^j$) with respect to the "input data" as per the images A,B and ii) to what extent the solution ($T^j$) is to confirm with desirable properties such as smoothness etc. as defined by the internal forces component(s) of the cost function.

An objective function to be minimized may be formulated based on a sum of (at least) two functionals, of which one functional $D$ corresponds to the similarity measure and another functional S corresponds to a regularizing or smoothing term,

$$F = D[u] + S[u] \rightarrow min \qquad\qquad (1)$$

where $u$ ranges over a space of registration transformations $T$. $u$ is a deformation vector field, in terms of which the transformation T can be described. This is because a closed analytic representation for $u$ in terms of a "formula" is not usually available. The functionals $D$ and S may contain further parameters such as the mentioned image processing algorithm parameter $p$, e.g., a parameter to control the amount of elasticity or, in other words, the local homogeneity or heterogeneity in the resulting deformation vector field.

For example, p may be configured as follows:

In the functional $D$, $p$ can be used to up- or downweight the influence of the similarity measure, e.g., $p$ can be a weighting factor or it can be an additional weighting factor. Choosing a value larger than 1 for $p$, will result in a registration output where the deformation vector field is less regularized.

In the functional $S$, $p$ can be used to control one or multiple parameters of a regularization operator. A regularization operator can act on combinations of spatial derivatives of directional components of the function $u$. A more simple example is to define the regularizer as the sum of squared first spatial derivatives such that the first component of u is derived wrt. the first direction, the second component of $u$ is derived wrt. the second direction etc. More complex examples contain derivative terms where the $k_1$-th component of $u$ is derived wrt. directions $k_2$ and $k_3$. The parameter p can work as a weighting factor for one or multiple of such terms, e.g.

$$S[u, p] = \int p \sum_{i,j=1}^{3} \left[ \partial_{x_j} u_i + \partial_{x_i} u_j \right]^2 + \theta \left[ \mathrm{div}\, u \right]^2 \, \mathrm{d}x \qquad\qquad (2)$$

Choosing a value larger than 1 for $p$, will result in a registration output where local changes in one component of the deformation vector field are closer related to local changes in another component of the deformation vector field.

The above are non-limiting examples how parameter p may be configured, how it acts and is used. In other setups, parameter may be configured or embedded differently into the registration algorithm at hand.

An output of interest in such a registration algorithm (1) is a vector field $u= DVF_i$, as described above. The vector fields may be in particular of the deformation vector field type that describe how area or volume elements need to be deformed in the registration.

As mentioned earlier, metric $\mu$ may be defined by evaluator SME based on one, two or more of such registration algorithm outputs per image location i. In particular, one or more deformations may be provided as output per image location i. The deformation vector fields can be analyzed by analyzer SA as a function of smoothness parameter $p$ of the registration algorithm, or of a regularization parameter $p$ more generally. It has been found that regularized non-rigid image registration type algorithms provide a good response to sliding motion. Such response can be suitably amplified by the choice of the metric $\mu$. Types of such amplifying metrics $\mu$ can be used in conjunction with registration algorithms or others, and will now be described in more detail.

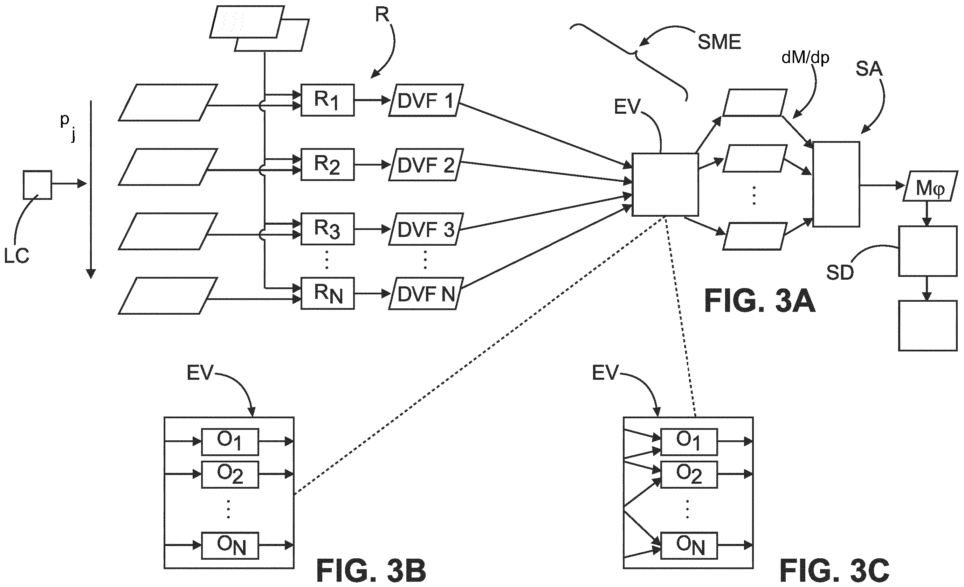

Fig. 3A-C show block diagrams of embodiments of the above-described system in Fig. 2, where a non-rigid type registration algorithm R is used. Output of non-rigid type registration algorithm R, such as deformation vector fields $DVF_i$ is analyzed by analyzer SA.

Referring first to Fig. 3A, various parameter values $p_j$ of the registration algorithm R are set and looped over by loop component of evaluator SME when processing the input imagery I1, I2. Fig. 3A shows different instances of the same registration algorithm R, one for each parameter value in the loop for parallel processing. However, sequential processing is also envisaged herein, in which case a single instance R is sufficient for processing, based on different parameter values $p_j$ in turn.

Sliding motion evaluator SME may implement registration algorithm R. The output of registration algorithm R (eg, the deformation vector fields) for some or each image location i of reference image I1 is processed by evaluator component EV of sliding motion evaluator SME to produce the series of maps $M_j$, for example by varying the parameter $p$. The entries in maps $M_j$ may represent values computed by applying operator O of metric $\mu$ to the output (such as the deformation vector fields) provided by registration algorithm R. The output series of maps $M_j$ is analyzed by the sensitive analyzer SA, for example by producing sensitivity map M$^s$ whose entries represent respective approximations of the local gradient d$M$/d$P$.

Figs. 3B, 3C show embodiments of evaluator component EV in more detail. For example, in one embodiment of Fig. 3A, the evaluator may comprise spatial operators O with single input per a single vector field and image location. Thus, operator O may compute per image location, shear per voxel, or volume change per voxel. Thus, the evaluator may evaluate based on a single deformation vector field $DVF_j$ per image location $i$.

In a multi-input-processing embodiment shown to the right at Fig. 3C, the evaluator EV may use operator O that takes as input, per image location i, at least two registration outputs to compute a respective entry per map. The at least two registration outputs are due to different parameter settings $p$ as will be explained in more detail below. The metric $\mu$ implemented by operator O may be a vector field difference of the two or more vector fields per vector location. A Euclidean distance (squared or not) may be used, for example, such as induced by normed space $Lp$, $p$ =2. Metrics induced by norms $Lp$, for $p$ other than 2 are also envisaged, and so are any other suitable metrics, such as weighted metrics.

For example, other metrics for computing map series $M_j$ by evaluator EV may include and one of the following: - In one embodiment, the metric $\mu$ is based on the determinant of the Jacobian of the deformation vector field ("Jacobian"). The Jacobian responds to local volume change. A Jacobian value of 1 corresponds to volume preservation. Two images acquired at different respiratory states will therefore result in Jacobian values close to 1 outside the lungs and typically different from 1 inside the lungs.

Choosing p to represent a relatively stiff elasticity results in a more homogeneous DVF. Jacobian values at the pleura for example are impacted by both the volume-preserving tissue outside the lungs and the volume-changing tissue inside the lungs.

On the other hand, choosing $p$ to represent a highly elastic setup results in a more heterogeneous deformation vector field. For example, Jacobian values for lung voxels close to the pleura are less impacted by tissue located outside the lungs. Therefore, the absolute difference dM(.) = |Jacobian(stiff)-Jacobian(elastic)| is highest in the transition zone between volume-preserving tissue and volume-changing tissue, and this transition zone happen to correspond to the sought-after sliding interface IF.

In another embodiment, metric $\mu$ may be chosen based on a maximum shear stress of the deformation vector field ("maximum shear"). This metric may be computed obtained from the principal stretches of an eigenvalue decomposition of the stretch tensor. Image voxels affected by sliding motion will result in a positive value for the maximum shear.

Similar to the Jacobian in the previous example, the choice of the elasticity value affects the homogeneity of the maximum shear map. While for a relatively stiff elasticity value for $p$, only image regions with a non-local (widespread) sliding are detected, whilst a $p$ value for a setup representing higher elasticity may allow detecting possible sliding locations on a local scale including false positive findings.

Using the proposed system SYS in the registration setup as per eq (1) above, with parameter $p$ configured to control regularization operator, may require a careful balancing act in order to reliably and robustly detect the sliding interface IF. Choosing a relatively low value for parameter $p$ will over-estimate local sliding resulting in a large number of false positive findings. Choosing a relatively high value for parameter $p$ results in a rather stiff deformation with few or zero local sliding findings.

The system as proposed herein with allowing $p$ to vary and using d$M$/d$p$ avoids having to case an optimal range of $p$. The proposed system allows for fully automated detection of sliding interfaces, without reliance on user knowing a priori a useful working range to achieve the above mentioned balance between having a large number of false positives on the one hand, and on the other hand having zero result where no such interface could be found.

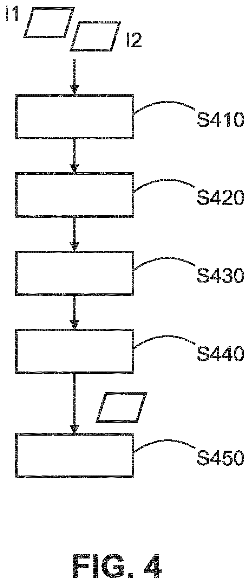

Reference is now made to the flow chart in Fig. 4 which shows steps of a computer-implemented method for image-based detection of a sliding interface in relation to two or more anatomical features in a patient.

Input received at step S410 include at least two input images 11, 12 acquired by a suitable imaging modality of a patient whilst there was sliding motion relative to the at least two such anatomical features. For example, imagery may be acquired during a beathing cycle, or during knee flexion or extension, or actuation of other joints, as the case may be.

At step S420 a severity or other aspect of the sliding motion is evaluated. This can be done in embodiments based on an algorithm such as a registration algorithm applied to the input images, one being used as a reference image. The evaluation results in spatial maps that includes entries capable of responding to the sliding motion as recorded in the two input images. A metric may be used to map the output of the registration algorithm into a scalar value per image element of the reference image or of one other of the input images. The output of the registration algorithm may include vector fields, such as deformation vector field, one or more such vector fields per image element. The metric is configured to respond to such sliding motion, in particular to image structure dynamics that is caused by such sliding motion. The metric may amplify the response of the registration algorithm. Such metric may be computed based on the output of the registration algorithm as applied to the two input images. A parameter of the registration algorithm may be varied to compute multiple maps in the evaluation. The maps are spatial data structures that represents the said entries per image location, for example per image location of reference image 11 or of input image 12.

At step S430 the series of maps are analyzed to produce a sensitivity map. This can be done by using a difference operator to compute an approximation of the gradient of the metric map versus the parameter. The sensitivity map may have the same size as any one of the metric maps and/or any one of the at least two input images.

At step S440 the sensitivity map produced at step S430 is analyzed for example by thresholding to provide an indication of the location of the interface. Thus, the output of step S440 may be a map, such as spatial mask, for one of the two input images where each entry represents whether or not the respective image location represents part of the sought after sliding interface in relation to the two anatomies.

At step S450 the output of step S440 may be processed further to provide an indication on presence or location of the interface as per input imagery. For example, the interface mask/map may be displayed on a display device. For example, a graphical representation of the map, suitable color coded or otherwise visually modulated, may be superimposed on at least one of the two input images.

Any other processing to yield a suitable such indication which the user can act upon is also envisaged herein. For example, in one embodiment such a localization may not be required and may be sufficient to provide a signal to indicate whether or not there is such an interface present in the situation as recorded by the two or more input images. In such binary type-indicator embodiments, where a mere induction is sought on whether or not there is such an interface IF present at all, the evaluation step may not yield a map but a scalar value that applies to the input imagery globally. For example, a single vector field for the whole image 11 or 12 may be provided of each parameter $p$, for example, an averaged vector field may be used or any other quantity that responds to sliding motion.

The above method may be implemented as follows in some embodiments.

$p$ is the parameter of the registration algorithm, preferably the parameter controlling the amount of elasticity, or a parameter controlling the weight of the regularization term in comparison to the similarity term, or, more general, a parameter controlling the smoothness of the resulting deformation.

Let $\mu$ be the metric evaluated voxel-wise on the output of the registration algorithm, e.g. the determinant of the Jacobian of the deformation vector field or the difference of largest and smallest absolute eigenvalues of the stretch tensor of the deformation vector field.

Parameter p may be initialized by setting to an initial value vo, typically used to achieve a good alignment. Parameter $p$ is then looped over a set of values $\{..., p_{-3}, p_{-2}, p_{-1}, p_0, p_1, p_2, p_3, ...\}$. For each such value $p_j$ the registration algorithm is run, with the selected value for $p$. The registration result, the deformation vector field $DVF_j$ is stored in a memory. Optionally, metric $\mu$ is used to evaluate output $DVF_j$ and the metric output is stored as map $M_j$ as part of a series $M$. As mentioned earlier, because the registration result is per image location $i$, $M_j$ is a map of same size as the input image, for example of the size of reference image. The sensitivity map $M^s$ may be computed as the gradient d$M$/d$p$ of M with respect to $p$. One way to compute $M^s$ in good approximation is using a difference operator to compute a sequence of differences d$M(p_{-2})$ :=$M(p_{-2})$-$M(p_{-3})$, d$M(p_{-1})$ :=$M(p_{-1})$-$M(p_{-2})$, d$M(p_0)$ :=$M(p_0)$-$M(p_{-1})$, etc. The sensitivity map Ms may then be analyzed, eg by thresholding, to obtain sliding interface localization map M$\varphi$. For the case where metric $\mu$ implemented by operator $O$ as a vector field difference of the two or more vector fields it is preferable to analyze M instead of dM

M(p) is generally of the same size as in the input images Thus, if 11 or 12 is 3D (an image volume), the gradient dM is a 4D volume (3D + t). If I1 or 12 is 2D, the gradient dM is a 3D data structure (2D+1).

A zero gradient dM corresponds to $\mu$ being insensitive to the parameter $p$. This fact may be used to conclude that either $\mu$ is not appropriately chosen orp is not appropriately chosen. The choice may be inappropriate as either $\mu$ or $p$ or both have no impact on the registration output. Also, a zero gradient may indicate the input images 11, 12 are (next to) identical or the input images consist of constant intensities, etc. Thus, in embodiments, the system may include a sanity-check loop SCL. This loop SCL analyzes gradient dM and if a zero value (optionally within a predefined margin) is found, an alert signal is issued, preferably by displaying on display device DD any or more of the above options. Thus, the sanity-check loop SCL may support user in exploratory work by finding suitable parameter choices. SCL may support user interface UI for the user to change any one or both of $\mu$, p. Gradient dM is dynamically revaluated upon receipt of change request, via user interface UI, for $\mu$, p.

Varying the parameter $p$, such as the elasticity parameter in non-rigid registration algorithm, within a larger range may result in inaccurate alignment. Both very low and very high elasticity values may result in failure of the registration algorithm to align major image structures of the image pair I1, I2. This situation may be avoided by choosing a suitable deformation vector field as initialization in an iterative registration algorithm. The following approach may be used: one may run a first registration with a value for $p$ known to result in a good overall alignment. Then, a second registration is run, with the output from the first registration used as initialization of the deformation vector field, but now with a value for $p$ chosen from a larger range.

With the proposed system and method, there is no reliance on potentially unstable segmentation algorithms. Thus, the proposed sliding interface detection does preferably not use image segmentation. In addition, the proposed method includes varying a registration parameterp to obtain the series of metric maps. This parameter-varying operation solves the problem of not knowing $p$. However, there may still be extreme (low or high) choices for $p$ resulting in inaccurate alignment. To overcome this, the above-described approach is used based on two registration runs: a 1st registration runs with a typical $p$, followed by a 2nd registration using the output of the 1st registration as input and where $p$ may be chosen from a very large range. Of note, whilst a selection of a typical parameter $p$ for the 1st registration does not as such pose a technical issue from a registration perspective (since choices from a large range may all result in a decent alignment), but may be for sliding interface detection, which is of main interest herein, and the proposed approaches described above provide a host of technical means to overcome this.

The proposed system SYS and method may be integrated as an optional feature in scanner consoles imaging such as CT, MR, US. In addition, proposed system SYS and method can be integrated as an option in a workstation for image post-processing.

The components of the SYS may be implemented as one or more software modules, run on one or more general-purpose processing units CU such as a workstation associated with the imager IA, or on a server computer associated with a group of imagers.

Alternatively, some or all components of system SYS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, system SYS may be implemented in both, partly in software and partly in hardware.

The different components of system SYS may be implemented on a single data processing unit CU. Alternatively, some or more components are implemented on different processing units CU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

**Claims**

1. Image processing system (SYS) for image-based sliding interface detection, comprising:

   an input port (IN) for receiving at least two medical input images (11,12), previously acquired at different times of a patient (PAT) during sliding motion of at least one of at least two anatomical features (AF1, AF2) of the patient against at least one other of the at least two anatomical features (AF1, AF2), the said sliding motion defining a sliding interface (SI) in respect of the at least two anatomical features (AF1, AF2);
   a sliding motion evaluator (SME) configured to apply a registration algorithm to compute, based on the at least two images and by varying a parameter of the said registration algorithm, a series of metric maps that are capable responding to sliding motion as recorded in the at least two input images;
   a sensitivity analyzer (SA) configured to compute a sensitivity map that represents how the series of metric maps vary with the said parameter; and
   a sliding interface detector (SD) configured to detect, based on the sensitivity map, a location of a representation of the sliding interface in at least one of the at least two input images.

2. System of claim 1, wherein the sliding motion evaluator (SME) is to apply the registration algorithm to the at least two input images at different instances of the parameter, in order to obtain the series of metric values based on a sequence of registration results per the said parameter.

3. System of claim 2, wherein the parameter is a regularization parameter that is configured to influence a smoothness term based on which the algorithm is operable.

4. System of any one of the previous claims, wherein the registration algorithm is based on establishing vector fields per parameter for at least one of the at least two images.

5. System of claim 4, wherein the metric is a function of the said vector fields.

6. System of claim 4 or 5, wherein the vector field is a deformation vector field.

7. System of claim 6, wherein the metric is based on any one of: i) a difference between vector fields, ii) a Jacobian of the vector fields, iii) eigenvalues of the vector fields, (iv) an operator acting on vector field.

8. System of any one of the previous claims, comprising a visualizer (VIZ) configured to generate a graphics display (GD) for display on a display device (DD), the graphics display (GD) including an indication of the location of the representation of the sliding interface in at least one of the at least two images.

9. System of any one of the previous claims, wherein the at least two images are acquired by any one of: i) imaging apparatus configured for transmission imaging, ii) an imaging apparatus configured for emission imaging, iii) a magnetic resonance imaging apparatus, iv) an ultrasound imaging apparatus.

10. System of any one of the previous claims, wherein detection operation by sliding interface detector (SD) is based on thresholding.

11. Arrangement (AR) comprising a system (SYS) of any one of the previous claims, and an imaging apparatus (IA).

12. A computer-implemented method for image-based sliding interface detection, comprising:

    receiving (S410) at least two medical input images (11,12), previously acquired at different times of a patient (PAT) during sliding motion of at least one of at least two anatomical features (AF1, AF2) of the patient against at least one other of the at least two anatomical features (AF1, AF2), the said sliding motion defining a sliding interface (SI) in respect of the at least two anatomical features (AF1, AF2);
    applying (S420) a registration algorithm to compute, based on the at least two images and by varying a parameter of the said registration algorithm, a series of metric maps that are capable responding to sliding motion as recorded in the at least two input images;
    computing (S430) a sensitivity map that represents how the series of metric maps vary with the said parameter; and
    detecting (S440), based on the sensitivity map,) a location of a representation of the sliding interface in at least one of the at least two input images.

13. A computer program element, which, when being executed by at least one computing unit (CU) is adapted to perform the method as per claim 12.

14. A computer readable medium having stored thereon the program element of claim 13.

FIG. 1

EP 4 350 608 A1

**FIG. 2**

EP 4 350 608 A1

**FIG. 3A**

**FIG. 3B**

**FIG. 3C**

EP 4 350 608 A1

I1

I2

S410

S420

S430

S440

S450

**FIG. 4**

Europäisches
Patentamt
European
Patent Office
Office européen
des brevets

# EUROPEAN SEARCH REPORT

**Application Number**

EP 22 19 9826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AMELON RYAN E. ET AL: "A Measure for Characterizing Sliding on Lung Boundaries", ANNALS OF BIOMEDICAL ENGINEERING, [Online] vol. 42, no. 3, 1 March 2014 (2014-03-01), pages 642-650, XP093032740, New York ISSN: 0090-6964, DOI: 10.1007/s10439-013-0920-5 internet Retrieved from the Internet: URL:https://www.ncbi.nlm.nih.gov/pmc/articles/PMC3943475/pdf/nihms531105.pdf> [retrieved on 2023-03-17] * the whole document * | 1-14 | INV. G06T7/00 G06T7/215 G06V10/46 ADD. G06T3/00 |
| A | MEGUMI NAKAO ET AL: "IGCN: Image-to-graph Convolutional Network for 2D/3D Deformable Registration", ARXIV.ORG, CORNELL UNIVERSITY LIBRARY, 201 OLIN LIBRARY CORNELL UNIVERSITY ITHACA, NY 14853, [Disk] 31 October 2021 (2021-10-31), XP091084201, [retrieved on 2023-03-17] * the whole document * * figures 3,5 * | 1-14 | |
| | -/-- | | TECHNICAL FIELDS SEARCHED (IPC) G06T G06V |

The present search report has been drawn up for all claims

| Place of search | Date of completion of the search | Examiner |
|---|---|---|
| The Hague | 18 March 2023 | Thollot, Julien |

EPO FORM 1503 03.82 (P04C01)

page 1 of 2

Europäisches
Patentamt

European
Patent Office

Office européen
des brevets

**EUROPEAN SEARCH REPORT**

Application Number

EP 22 19 9826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHREIBMANN E ET AL: "Four-Dimensional Image Registration for Image-Guided Radiotherapy", INTERNATIONAL JOURNAL OF RADIATION: ONCOLOGY BIOLOGY PHYSICS, PERGAMON PRESS, USA, [Disk] vol. 71, no. 2, 1 June 2008 (2008-06-01), pages 578-586, XP022650866, ISSN: 0360-3016, DOI: 10.1016/J.IJROBP.2008.01.042 [retrieved on 2008-04-18] * the whole document * ----- | 1-4 | |
| A | CN 113 327 274 A (SUZHOU INST BIOMEDICAL ENG & TECH CAS) 31 August 2021 (2021-08-31) * the whole document * * figures 2-4 * ----- | 1-14 | |

TECHNICAL FIELDS
SEARCHED (IPC)

The present search report has been drawn up for all claims

| Place of search | Date of completion of the search | Examiner |
|---|---|---|
| The Hague | 18 March 2023 | Thollot, Julien |

EPO FORM 1503 03.82 (P04C01)

page 2 of 2

## ANNEX TO THE EUROPEAN SEARCH REPORT
## ON EUROPEAN PATENT APPLICATION NO.

EP 22 19 9826

This annex lists the patent family members relating to the patent documents cited in  the above-mentioned European search report.
The members are as contained in the European Patent Office EDP file on
The European Patent Office is in no way liable for these particulars which are merely given for the purpose of information.

18-03-2023

| Patent document cited in search report | | Publication date | Patent family member(s) | Publication date |
|---|---|---|---|---|
| CN 113327274 | A | 31-08-2021 | NONE | |

---------------------------------------------------------------------

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R AMELON et al.** A measure for characterizing sliding on lung boundaries. *Ann. Biomed. Eng.,* 2014, vol. 42 (3), 642-50